Europäisches Patentamt

European Patent Office

Office européen des brevets

(19)

(11) Publication number:
**0 102 439**
**B1**

(12) **EUROPEAN PATENT SPECIFICATION**

(45) Date of publication of patent specification: **03.12.86**

(21) Application number: **82850178.3**

(22) Date of filing: **08.09.82**

(51) Int. Cl.⁴: **G 01 B 17/00**

(54) Method of measuring the dimensions of tools and/or workpieces of metal.

(43) Date of publication of application:
14.03.84 Bulletin 84/11

(45) Publication of the grant of the patent:
03.12.86 Bulletin 86/49

(84) Designated Contracting States:
CH DE FR GB LI

(56) References cited:
DE-A-2 121 070

(73) Proprietor: **Sundström, Erik**
**Dalkärrsleden 32**
**S-162 24 Vällingby (SE)**

(72) Inventor: **Sundström, Erik**
**Dalkärrsleden 32**
**S-162 24 Vällingby (SE)**

(74) Representative: **Onn, Thorsten et al**
**AB STOCKHOLMS PATENTBYRA Box 3129**
**S-103 62 Stockholm (SE)**

Courier Press, Leamington Spa, England.

EP 0 102 439 B1

## Description

This invention relates to a method of measuring dimensional characteristics of the tool or of the workpiece in an electric discharge machining apparatus.

The conventional measuring methods of controlling tool wear are, besides direct optical inspection,

a) detection of light reflections from tool-workpiece, which reflections are produced using an external source,

b) mechanical contact measuring, and

c) analysis of sound waves in the workpiece or tool, which waves come from a transducer designed for this purpose.

Of these methods a) — c), which are feed-back methods for controlling the tool in response to wear, the methods a) and b) as they are developed to-day, are very sensitive to the severe environment prevailing at all cutting operations. The methods, furthermore, imply high requirements on accessability. The cost in connection with these methods are high.

The method c) is applied generally to crack detection. The use of ultra-sound for measuring in metals, however, implies serious dissolution problems, due to the great sound speeds. The method c), besides, is sensitive to interferences and has not been successfully applicable in connection with machining.

The present invention as it is defined in Claim 1 renders it possible to eliminate the aforesaid disadvantages at the known measuring methods, and at the same time provides new possibilities for measuring accurately complicated tools and workpieces during the ongoing machining operation in electric-discharge machining (spark-machining).

The invention, therefore is described in the following applied to this type of machining, with reference to the accompanying drawing, in which

Fig. 1 shows schematically a spark machining tool, and

Fig. 2 shows schematically a spark machining tool and a workpiece machined by the tool.

The electrode 1 constituting the tool proper is carried in conventional manner by an electrode holder 2, which in its turn in known manner (not shown) is clamped in a machine chucking fixture. The workpiece machined by the tool is designated by 3. The details 1—3 are conventional components of electric-discharge machining tools know to-day and, therefor, are not described here in greater detail.

The machining proper by sparking, and the theories thereof, are not a part of the present invention, either, and, therefore; it is in this case referred to generally applied technology.

The measurement is carried out during the machining operation just at the moment of machining by means of the electric discharge in the dielectric medium between tool and workpiece. On occurrence of the discharge an ultra-sound wave is produced, radiating from the point of discharge on the surface of the tool or from the workpiece, which discharge gives rise to high accelerations in the longitudinal direction and brings about a well-defined wave front of high speed in the electrically conductive materials of the electrode or the workpiece, because the dielectric behaves as a Newton's liquid.

This sound wave is detected, for example, by means of piezoelectric elements, which emit relatively distinct electrical signals.

In order to measure the wear of the tool 1, three piezoelectric receivers 5 are attached by means of a ring 4 in well-defined positions fixed in relation to the tool. The arrival of the pressure wave front at the three receivers 5 in their well-defined positions, which preferably are located in one plane in common, renders it possible to unambiguously determine the spark position in the tool, because the point of time of the spark discharge is known.

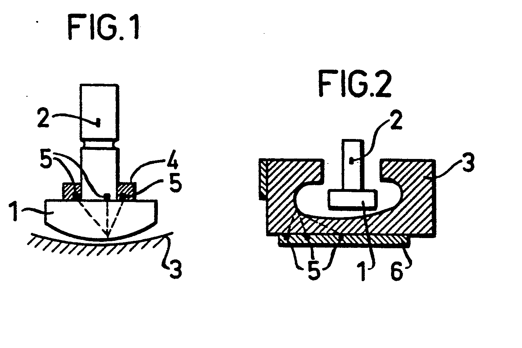

In Fig. 2 three piezoelectric receivers are arranged in well-defined fixed positions on a plate 6, which is attached in a place suitable for measurement on the workpiece 3. The evaluation of the three signals from the receivers 5 yields an unambiguous determination of the spark position on the workpiece 3.

Due to the fact that the wave front, as mentioned, has high speed and causes great particle acceleration, in the tool and the workpiece the piezoelectric receiver thereby emits a distinct signal, and the sensitivity can thus be adjusted so that lower frequency interference is damped out, and also the contact surface of the receiver can be dimensioned small and well-defined.

The spark discharge, thus, gives rise to current pulses generated in three separate piezoelectric receivers according to this embodiment. The point of time for these three current pulses, signals, emitted in three definite places is used for evaluating and determining the position for the spark discharge. Only the point of time for the occurrence of a sound wave, thus, is used for the measuring process and, consequently, no phase shifts or other qualitative or quantitative wave parameters, which usually occur in analog systems are used in the measurement.

On the basis of the aforesaid, i.e. starting from the point of time of the discharge, and using an external time signalling circuit, it is possible for the expert with knowledge of the computerized control technology of to-day to practically work the invention. By means of suitable evaluation and feed-back systems, thus, spark machining equipment can be produced which during the ongoing operation continuously controls the tool for a complete compensation of the tool wear.

Other applications of the invention are wear research or information on optimum tool exchange criteria in manual spark machining. Spark machining in a dielectricum, for example, can be introduced as a production step production line and in a DNC-system, informing by feed-back on the tolerance situation of cutting machines in preceding steps. Instead of spark machining as a production step, spark discharge can be introduced as a "final" step for measurement control and by feed-back to control tool exchanges in preceding machining steps.

## Claims

1. A method of measuring dimensional characteristics, such as the wear, position, etc. of the tool or of the workpiece in an electric-discharge machining apparatus in which a di-electric medium is present between the tool and an electrically conductive workpiece, through which medium discharges occur between the tool and the workpiece, and in which apparatus each discharge produces an ultrasonic wave front in said tool and/or said workpiece, said wave front radiating from the point of discharge on the surface of said tool or said workpiece, said method comprising determining the position of said point by detecting the ultrasonic wave front at least three predetermined positions separated from each other on tool or workpiece, by measuring the time of propagation of the ultrasonic wave front from the point of discharge to said predetermined positions.

2. A method as defined in claim 1, wherein the predetermined positions are located in one plane.

3. A method as defined in claim 1 or 2, wherein the ultrasonic wave front is converted by pressure-sensitive transducers to provide time responsive current pulses which are analysed by a digital measuring system.

4. A method as defined in any one of the preceding claims, wherein said tool and/or workpiece are controlled in dependence upon said determined dimensional characteristics.

## Patentansprüche

1. Verfahren zur Messung von Dimensionskennzeichen, wie Verschleiss, Lage u.s.w. des Werkzeugs oder des Werkstücks in einem elektrischen Entladungsbearbeitungsgerät, in dem ein dielektrisches medium zwischen dem Werkzeug und einem elektrisch leitenden Werkstück vorhanden ist, durch welches Medium Entaladungen zwischen dem Werkzeug und dem Werkstück vorkommen und in welchem Gerät jede Entladung eine Ultraschallwellenfront in erwähntem Werkzeug und/oder Werkstück erzeugt, wobei die erwähnte Wellenfront von der Spitzenentladung auf der Oberfläche des erwähnten Werkzeugs oder Werkstücks aussendet, wobei das erwähnte Verfahren die Positionsbestimmung der erwähnten Spitze durch Entdeckung der Ultraschallwellenfornt an wenigstens drei vorausbestimmten Lagen von einander auf dem Werkzeug oder auf dem Werkstück abgetrennt, einschliesst, durch Messung der Zeit der Ausbreitung der Ultraschallwellenfront von der Spitzenentladung zu den erwähnten vorbestimmten Lagen.

2. Verfahren gemäss Anspruch 1 dadurch gekennzeichnet dass die vorbestimmten Lagen in einer Ebene gelegen sind.

3. Verfahren gemäss Anspruch 1 oder 2 dadurch gekennzeichnet, dass die Ultraschallwellenfront von druckempfindlichen Wandlern umgewandelt ist, zeitabhängige Strompulse zu versorgen, die durch ein digitales Messsystem analysiert sind.

4. Verfahren gemäss einem der vorhergehenden Ansprüche, dadurch gekennzeichnet, dass das Werkzeug und/oder Werkstück von den erwähnten bestimmten Dimensionkennzeichen gesteuert sind.

## Revendications

1. Méthode de mesure de caractéristiques dimensionnelles, telles que l'usure, la position etc., de l'outil ou de la pièce d'oeuvre dans un appareil d'usinage par décharge électrique avec présence, entre l'outil et une pièce d'oeuvre électroconductrice, d'un diélectrique à travers lequel des décharges se produisent entre l'outil et la pièce d'oeuvre, appareil dans lequel chaque décharge fait naître un front d'onde ultrasonore dans ledit outil et/ou dans ladite pièce d'oeuvre, ledit front d'onde rayonnant du point de décharge à la surface dudit outil ou de ladite pièce d'oeuvre, méthode comprenant la détermination de la position dudit point par détection du front d'onde ultrasonore en au moins trois positions prédéterminées différentes disposées sur l'outil ou sur la pièce d'oeuvre , par mesure du temps de propagation du front d'onde ultrasonore du point de décharge auxdites positions prédéterminées.

2. Méthode selon la revendication 1, selon laquelle les positions prédéterminées sont disposées dans un plan.

3. Méthode selon l'une des revendications 1 et 2, selon laquelle le front d'onde ultrasonore est converti par des transducteurs sensibles à la pression de manière à fournir des impulsions de courant sensibles au temps qui sont analysées par un système de mesure numérique.

4. Méthode selon un quelconque des revendications précédentes, selon laquelle ledit outil et/ou ladite pièce d'oeuvre sont commandés en fonction desdites caractéristiques dimensionnelles déterminées.

# FIG.1

# FIG.2